# FASCICULE DE BREVET EUROPEEN

(11) **EP 1 685 727 B1**
(45) Date de publication et mention de la délivrance du brevet: **21.11.2018**
(21) Numéro de dépôt: 04818449.3
(22) Date de dépôt: 18.10.2004
(51) Int. Cl.: H04W 4/06, H04W 52/02

(54) **PROCÉDÉ ET SYSTÈME DE TRANSMISSION ET DE RÉCEPTION DE CONTENUS MULTIMÉDIA VIA UN RÉSEAU RADIOCOMMUNICATION**
VERFAHREN UND SYSTEM ZUM SENDEN/EMPFANGEN VON MULTIMEDIA-INHALT ÜBER EIN FUNKKOMMUNIATIONS-NETZWERK
METHOD AND SYSTEM FOR TRANSMITTING/RECEIVING MULTIMEDIA CONTENT VIA A RADIOCOMMUNICATION NETWORK

(30) Priorité: 10.11.2003 FR 0313255
(43) Date de publication de la demande: 02.08.2006
(73) Titulaire: Alcatel Lucent, 91620 Nozay (FR)
(72) Inventeur: VINCENT, Paul, F-31830 PLAISANCE DU TOUCH (FR); LE BODIC, Gwenaël, 40235 Dusseldorf (DE); CHUBERRE, Nicolas, F-31820 PIBRAC (FR)
(74) Mandataire: Nokia EPO representatives
(86) Numéro de dépôt international: PCT/FR2004/002662
(87) Numéro de publication internationale: WO 2005/048295

(56) Documents cités:
- EP-A- 0 944 275
- EP-A- 1 233 576
- WO-A-03/045064

## Description

La présente invention concerne le domaine de la diffusion de contenus multimédia au sein d'un réseau de radiocommunication, lesdits contenus étant destinés à des terminaux mobiles et plus particulièrement les téléphones mobiles.

Dans la plupart des réseaux de radiocommunication cellulaire connus, il existe un canal, appelé canal de diffusion cellulaire (CBCH, pour Cell Broadcast Channel dans la terminologie GSM), spécifique à chaque cellule, et destiné à la diffusion de messages d'information en général courts à destination de stations mobiles évoluant dans la cellule considérée. Pour des raisons de clarté, ce canal (ou des canaux équivalents dans d'autres systèmes) sera dénommé canal de diffusion.

Ces informations sont mises à la disposition de l'utilisateur d'un terminal mobile (par exemple un téléphone mobile) sous forme d'un message de texte affiché sur l'écran du terminal mobile, de sons, de séquences vidéo ou bien sous forme d'un message vocal lorsque leur canal de diffusion est un canal vocal.

Pour recevoir ces informations, un terminal mobile doit écouter le canal d'information, c'est-à-dire être constamment actif en réception sur ce canal. Or il peut arriver à certains moments qu'aucun message de diffusion ne soit effectivement diffusé sur le canal de diffusion, ce qui peut être dû par exemple au fait qu'il n'y a aucune nouvelle information à diffuser. Les terminaux mobiles, de leur côté, ne peuvent pas savoir qu'aucune information ne sera diffusée à tel ou tel instant, de sorte qu'ils sont en permanence actifs en réception sur le canal de diffusion et donc parfois inutilement. Il en est de même lorsque certaines des informations diffusées n'intéressent pas l'utilisateur d'un terminal mobile.

Le document WO-03/045064 décrit un procédé selon lequel tous les terminaux doivent envoyer une requête pour accéder à un portail hébergé par un serveur, puis accuser réception au serveur. En réponse, le serveur envoie en retour les paramètres du service de diffusion au terminal.

Pour un téléphone mobile, le fait d'avoir à écouter en permanence un canal qui peut ne contenir aucune information, ou éventuellement aucune information intéressante pour son utilisateur, entraîne une consommation importante d'énergie. Or, on sait qu'un souci constant est de diminuer la consommation des téléphones mobiles, afin de conférer à leur batterie une autonomie aussi importante que possible. Un autre problème, dans ce contexte, réside du côté du réseau de radiocommunication, qui doit véhiculer de nos jours des informations qui ont une taille de plus en plus importante, ce qui peut surcharger le réseau. Le coût de transmission de tels volumes d'informations peut en outre être prohibitif.

La présente invention a donc pour but de mettre au point un procédé de diffusion permettant aux terminaux mobiles de recevoir uniquement les informations qui les intéressent sans surcharger inutilement le réseau.

A cet effet, la présente invention propose un procédé de transmission de contenus multimédia pour un système de transmission apte à communiquer avec un réseau de radiocommunication, destiné à transmettre lesdits contenus à une pluralité de terminaux mobiles, le système comprenant un premier serveur apte à fournir un service de transmission de contenus point à point, caractérisé en ce que ledit procédé comporte les étapes suivantes :
- une première étape de transmission sur un canal dédié pour les transmissions point à point, par un premier serveur MMSC, apte à fournir un service de transmission de contenus point à point, d'une notification standardisée dans le standard MMS comportant un identifiant spécifique à un contenu vers l'ensemble des terminaux (2) enregistrés par le premier serveur MMSC comme étant intéressés par ce contenu,
- une deuxième étape de transmission par le premier serveur MMSC vers un second serveur BM-SC standardisé dans le standard MBMS, apte à fournir un service de transmission de contenus à large diffusion, d'une requête de diffusion d'un message comportant ledit contenu dans son intégralité ainsi que son identifiant,
- une troisième étape de transmission à large diffusion par ledit second serveur BM-SC dudit message sur un canal de diffusion large.

Selon un mode de réalisation, dans la première étape, l'identifiant est accompagné d'une valeur correspondant à un délai d'attente de réception par les terminaux du contenu, étant entendu que, passé ce délai d'attente sans réception dudit contenu par les terminaux, une requête de téléchargement par le premier serveur dudit contenu via ledit canal dédié pour les transmissions point à point est réalisée.

Selon un mode de réalisation, la requête de diffusion est, dans le standard MMS, sous une forme du type "Broadcast-Request" comportant un identifiant URI et ledit contenu "MMS Message".

L'invention a également pour objet un procédé de réception de contenus multimédia pour un terminal mobile apte à communiquer via un réseau de radiocommunication à un serveur de transmission de contenus point-à-point, caractérisé en ce que ledit procédé comporte les étapes suivantes :
- une première étape de réception depuis un premier serveur de transmission de contenus point-à-point MMSC, sur un canal dédié pour les transmissions point à point, d'un identifiant spécifique à un ou des contenus par les terminaux mobiles (2) enregistrés par le premier serveur MMSC comme étant intéressés par ce contenu,
- une deuxième étape de transmission par le premier serveur MMSC vers un second serveur BM-SC standardisé dans le standard MBMS, apte à fournir un service de transmission de contenus à large diffusion, du contenu dans son intégralité et de son identifiant,
- une troisième étape de réception depuis le serveur BM-SC, sur un canal de diffusion large, d'un message comportant le ou lesdits contenus ainsi que l'identifiant par les terminaux mobiles (2).

Selon un mode de réalisation, selon le procédé de réception selon l'invention :
- durant la première étape de réception, le terminal reçoit également une clé de déchiffrement,
- durant la seconde étape de réception, le terminal utilise cette clé de déchiffrement pour déchiffrer le contenu.

Les caractéristiques et avantages de la présente invention apparaîtront plus clairement à la lecture de la description qui suit, donnée à titre d'exemple illustratif non limitatif et faite en référence aux figures annexées dans lesquelles
- La figure 1 illustre schématiquement une architecture réseau connue sous le nom de système de messagerie multimédia ou MMS (de l'anglais "Multimedia Messaging System"),
- La figure 2 illustre schématiquement la structure d'un message multimédia MMS,
- La figure 3 représente un mode de réalisation de l'architecture fonctionnelle du système de transmission/réception selon l'invention,
- La figure 4 représente les différentes étapes du procédé selon l'invention.

L'essor des messages multimédia, dits MMS (Multimédia Messaging Service), fait suite au grand succès des services de messages courts et avancés, dits SMS et EMS, dans le domaine de la radiocommunication. Les MMS constituent un développement de ce type de service de messagerie en offrant la possibilité d'inclure de plus en plus de données multimédia, tels que des images, des sons, des séquences vidéo et autres. L'échange de MMS peut être supporté par les réseaux radio dits de deuxième et troisième génération, tels que le GPRS (General Packet Radio Service) ou l'UMTS (Universal Mobile Télécommunication System) par exemple. En outre, les services de messagerie MMS ont pris en compte les contraintes d'interopérabilité avec les services de messagerie électronique via l'Internet pour définir la structure et le mode d'échange des MMS. Un terminal de radiocommunication, conçu pour supporter un service de messagerie MMS et pour fonctionner sur un réseau de deuxième ou troisième génération, peut donc échanger des messages multimédia avec des terminaux reliés au réseau Internet ou à d'autre type de réseau filaire ou sans fil.

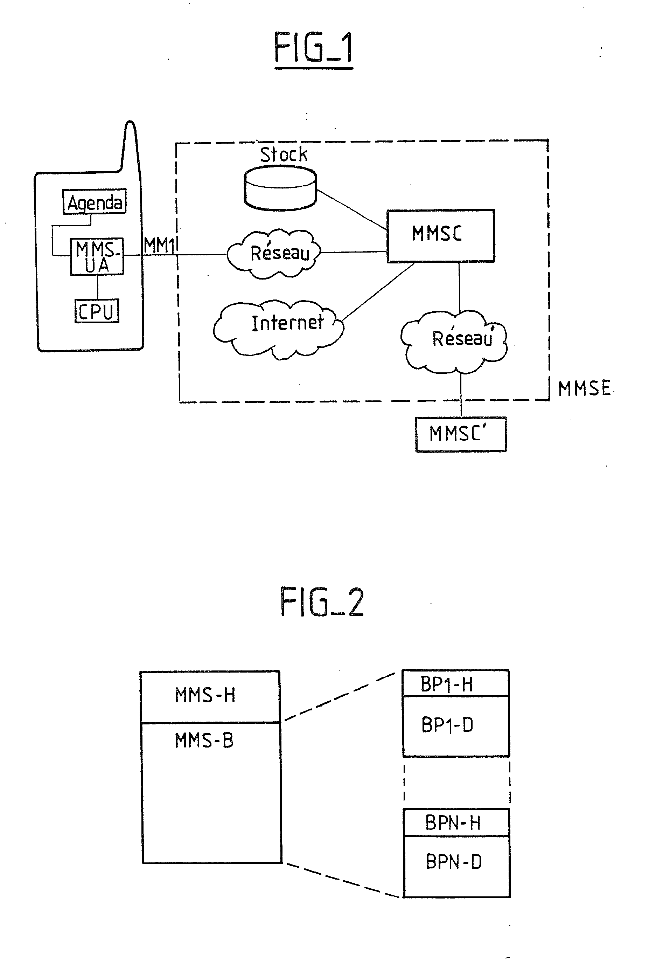

La figure 1 illustre schématiquement l'architecture réseau d'un service de messagerie multimédia.

L'architecture MMS requiert d'une part une infrastructure réseau apte à transporter, adapter et stocker les messages MMS, et d'autre part des éléments logiciels permettant la composition, l'envoi et la réception de messages MMS, tant au niveau du terminal mobile que du réseau.

Ainsi, un environnement MMS est défini dans un réseau de radiocommunication donné, désigné sous le terme de MMSE (MMS Environment), incluant un ensemble d'éléments réseau sous le contrôle d'un fournisseur de service de messagerie multimédia (connu comme MMS provider) donnant accès aux services MMS dans le cadre d'un abonnement utilisateur audit réseau.

En outre, un terminal de radiocommunication apte à échanger des MMS contient un logiciel, désigné comme MMS User Agent (MMS-UA) en terminologie anglaise, qui est embarqué dans le terminal. Ce logiciel (MMS-UA) permet la composition, la présentation, l'envoi et la réception des messages MMS. Chaque MMS-UA émetteur et récepteur d'un MMS est attaché à un environnement MMSE correspondant respectivement au domaine d'abonnement réseau du terminal émetteur et récepteur, ces environnements émetteur et récepteur pouvant éventuellement être les mêmes. Un MMS-UA communique avec le serveur MMSC de son environnement MMSE par une interface dédiée MM1 dudit serveur.

La clé de voûte de l'architecture réseau MMS est le serveur relais, communément désigné par le sigle MMSC pour MMS Centre, représenté sur la figure 1. Un MMSC est associé à un environnement MMSE donné. Le MMSC est en charge d'une part du transport des messages MMS dans ledit environnement et vers d'autres centres MMSC' attachés à d'autres environnements MMSE' ou vers d'autres serveurs de messagerie et d'autre part du stockage (Stock) des messages MMS dans l'attente de leur délivrance à un terminal attaché audit environnement MMSE. Par ailleurs, le MMSC est également en charge de l'adaptation de contenu des messages MMS, de la tenue de registres d'abonnés et de l'interface avec les systèmes de facturation et d'application de services proposés aux abonnés.

La figure 2 illustre schématiquement la structure d'un message MMS. Généralement, un message multimédia se présente sous la forme d'un message dit multiparties permettant d'inclure des éléments non textuels tels que des images, des sons ou des séquences vidéo à représenter simultanément lors de la lecture du message. Un tel MMS multiparties est alors mis en forme selon le format MIME (Multipurpose Internet Mail Extensions) étendu d'un encodage binaire pour le transfert du message sur le lien radio.

Classiquement, un MMS présente un en-tête (MMS-H) et un corps (MMS-B) pouvant contenir une pluralité de parties, connues comme Body Part (BP), correspondant chacune à un élément du message MMS tel qu'un son, une image... Le corps du message (MMS-B) se compose donc d'une succession de parties (BP) contenant chacune un en-tête (BP-H) indiquant le type d'élément et sa taille et des données (BP-D) représentant la définition dudit élément de message.

L'en-tête du message (MMS-H) contient des informations relatives au transport du message, telles que, entre autre, l'identification du destinataire, de l'émetteur, des destinataires en copie, une indication de délivrance du message ; et des informations relatives au message envoyé, telles que, entre autre, la date d'envoi, la date de validité du message, l'adresse à laquelle il faut répondre, l'identification du message auquel il est répondu, l'objet du message...

Les informations de l'en-tête sont organisées selon des champs auxquels sont attribuées des valeurs.

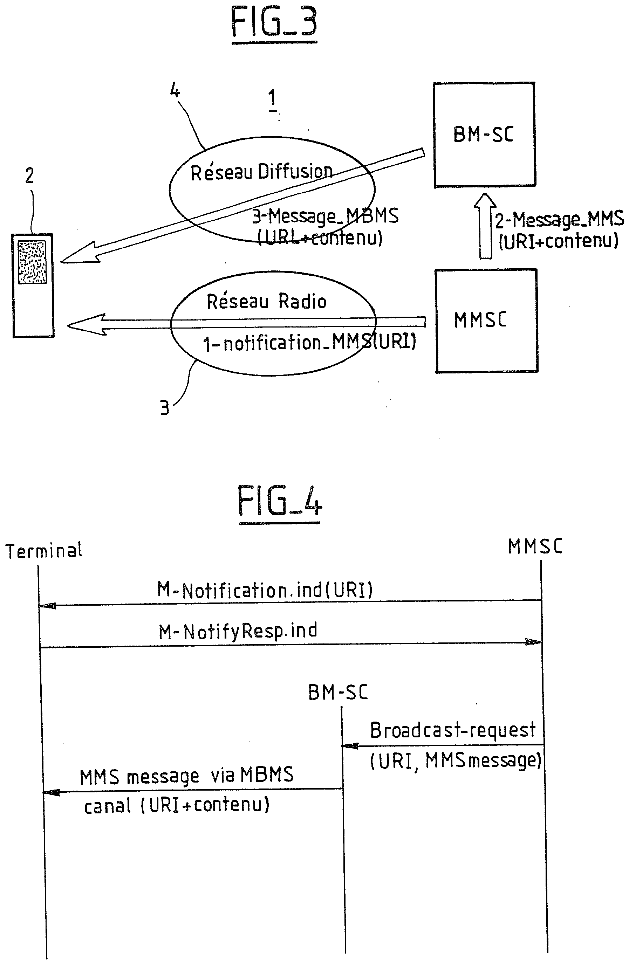

La figure 3 illustre un système 1 de transmission/réception de contenus multimédia selon l'invention. Il comporte un premier serveur MMSC relié à un second serveur BM-SC (de l'anglais "Broadcast Multicast Service Center"), un réseau de radiocommunication 3 (qui peut être du type GPRS ou UMTS) et un réseau 4 de large diffusion, du type DVB (de l'anglais "Digital video Broadcast"), S-DMB (de l'anglais "Satellite Digital Multimedia Broadcast") ...

Le système de l'invention comporte, en outre, une pluralité de terminaux 2 affectés respectivement à des utilisateurs qui sont intéressés par le service fourni par le premier serveur. Dans la suite de la description, on se réferera également à la figure 4, où il est représenté les différentes étapes mises en oeuvre par le système de transmission/réception de la figure 3.

En premier lieu, le serveur MMSC envoie une notification en liaison point à point sur les terminaux 2. Les terminaux 2 qui recevront cette notification sont ceux qui ont manifesté leur intérêt pour le message et son contenu (par le biais d'abonnements, ou dans le cadre d'une campagne publicitaire, etc). Cette notification adressée à l'égard des terminaux 2 intéressés pourra prendre la forme standardisée dans le standard MMS d'une notification telle que M-Notification.ind telle que représentée dans la figure 4 et comportant notamment une information URI (de l'anglais "Uniform Ressource Identifier") qui servira d'identifiant unique pour l'identification du message de contenu à réceptionner par le terminal. Une fois la notification reçue, le terminal retournera un message d'accusé réception au serveur MMSC, de la forme M-NotifyResp. ind.

A ce moment, le MMSC transmet une requête de diffusion large au BM-SC, de la forme Broadcast-request. Cette dernière requête comportera l'identifiant unique URI ainsi que le message de contenu dans son intégralité. On notera d'ailleurs que le serveur BM-SC est celui standardisé dans le standard MBMS (de l'anglais "Multimedia Broadcast Multicast System") défini par l'organisme 3GPP (de l'anglais "3rd Generation Partnership Project").

Suite à cette requête du serveur MMSC, le serveur BM-SC diffuse de façon large, à savoir sur un canal MBMS de large diffusion, un message comportant l'identifiant unique URI ainsi que le contenu intérressant les utilisateurs. Cette dernière transmission est réalisée à travers le réseau de diffusion 4. Le terminal 2 ayant en mémoire l'identifiant URI est capable de reconnaître le message qui l'intéresse grâce à ce dernier identifiant.

Selon une réalisation avantageuse, l'identifiant URI est accompagné d'une valeur correspondant à un délai d'attente de réception par le terminal 2 du contenu, étant entendu que passé ce délai d'attente sans réception du contenu, le terminal procèdera à une requête de téléchargement du contenu via le canal MMS dédié pour les transmissions point à point. On notera par exemple TTB le paramètre de délai d'attente pour "Time To Broadcast".

Selon une réalisation avantageuse supplémentaire, le terminal reçoit également une clé de déchiffrement dans la première notification émise par le MMSC. Le terminal 2 utilise alors cette clé de déchiffrement pour déchiffrer le contenu qu'il reçoit du BM-SC.

Ainsi l'invention selon la présente est bien adaptée pour des systèmes à large diffusion tels que le SDMB. Elle est également facilement mise en oeuvre avec très peu d'impact sur les standards existants tels que le MMS, nécessitant ainsi qu'une légère modification logicielle sur le logiciel embarqué du terminal et l'adjonction d'un serveur de diffusion et des moyens de transmission/réception entre les deux serveurs cités. Elle est par ailleurs compatible avec la stratégie de réduction d'énergie du terminal puisque le terminal est engagé dans une transmission point à point dès lors qu'il ne reçoit pas le contenu attendu au-delà dudit certain délai.

Bien entendu, l'invention n'est pas limitée aux modes de réalisation décrits dans la présente demande.

Ainsi, le premier serveur de transmission point-à-point est applicable à tout type de liaison point-à-point. L'utilisation du standard MMS n'est évidemment pas limitatif et peut être étendu à toute liaison pouvant véhiculer du contenu multimédia. De même, le second serveur de diffusion large est lui applicable à tout type de transmission large. On notera que la diffusion ou transmission large correspond, dans la présente, à l'utilisation d'un canal « perceptible » par tous les terminaux.

## Revendications

1. Procédé de transmission de contenus multimédia pour un système de transmission (1) destiné à transmettre lesdits contenus à une pluralité de terminaux mobiles (2) via un réseau de radiocommunication (3) (GPRS, UMTS), comportant les étapes suivantes :
- une première étape de transmission sur un canal dédié pour les transmissions point à point, par un premier serveur MMSC, apte à fournir un service de transmission de contenus point à point, d'une notification standardisée dans le standard MMS comportant un identifiant spécifique à un contenu vers l'ensemble des terminaux (2) enregistrés par le premier serveur MMSC comme étant intéressés par ce contenu,
- une deuxième étape de transmission par le premier serveur MMSC vers un second serveur BM-SC standardisé dans le standard MBMS, apte à fournir un service de transmission de contenus à large diffusion, d'une requête de diffusion d'un message comportant ledit contenu dans son intégralité ainsi que son identifiant,
- une troisième étape de transmission à large diffusion par ledit second serveur BM-SC dudit message sur un canal de diffusion large.

2. Procédé de transmission selon la revendication 1, dans lequel, dans la première étape, à l'identifiant est joint une valeur correspondant à un délai d'attente de réception du contenu par les terminaux mobiles (2), étant entendu que, passé ce délai d'attente sans réception dudit contenu par les terminaux mobiles (2), une requête de téléchargement par le premier serveur MMSC dudit contenu via ledit canal dédié pour les transmissions point à point est réalisée.

3. Procédé de transmission selon l'une des revendications 1 et 2, dans lequel la requête de diffusion est, dans le standard MMS, sous une forme du type "Broadcast-Request" comportant un identifiant URI et ledit contenu "MMS Message".

4. Procédé de transmission selon la revendication 3, dans lequel la notification de liaison point à point standardisée dans le standard MMS est de la forme M-Notification.ind.

5. Procédé de transmission selon la revendication 4, dans lequel le premier serveur MMSC reçoit un message d'accusé réception de la forme M-NotifyResp.ind des terminaux mobiles (2) ayant reçu la notification de la forme M-Notification.ind.

6. Procédé de transmission selon l'une des revendications précédentes, dans lequel le premier serveur MMSC transmet une clé de déchiffrement vers l'ensemble des terminaux mobiles (2) pour être utilisée pour le déchiffrement du contenu par l'ensemble des terminaux mobiles (2).

7. Procédé de transmission selon l'une des revendications précédentes, dans lequel les terminaux mobiles (2) manifestent leur intérêt pour le message dans le cadre d'une campagne publicitaire.

8. Procédé de transmission selon l'une des revendications précédentes, dans lequel les terminaux mobiles (2) manifestent leur intérêt pour le message par le biais d'abonnements.

9. Procédé de réception de contenus multimédia par un terminal mobile (2) apte à communiquer via un réseau de radiocommunication (3) comportant les étapes suivantes :
- une première étape de réception depuis un premier serveur de transmission de contenus point-à-point MMSC, sur un canal dédié pour les transmissions point à point, d'un identifiant spécifique à un ou des contenus par les terminaux mobiles (2) enregistrés par le premier serveur MMSC comme étant intéressés par ce contenu,
- une deuxième étape de transmission par le premier serveur MMSC vers un second serveur BM-SC standardisé dans le standard MBMS, apte à fournir un service de transmission de contenus à large diffusion, du contenu dans son intégralité et de son identifiant,
- une troisième étape de réception depuis le serveur BM-SC, sur un canal de diffusion large, d'un message comportant le ou lesdits contenus ainsi que l'identifiant par les terminaux mobiles (2).

10. Procédé de réception selon la revendication 9, dans lequel, durant la première étape de réception, le terminal mobile (2) reçoit également une clé de déchiffrement par le canal dédié pour les transmissions point à point du réseau de radiocommunication (3) et, durant la seconde étape de réception, le terminal mobile (2) utilise cette clé de déchiffrement pour déchiffrer le contenu.

11. Procédé de réception selon l'une des revendications 9 et 10, dans lequel le terminal mobile (2) reçoit une valeur jointe à l'identifiant correspondant à un délai d'attente de réception du contenu, étant entendu que, passé ce délai d'attente sans réception dudit contenu par le terminal mobile (2), une requête de téléchargement par le premier serveur MMSC dudit contenu via le canal dédié pour les transmissions point à point est réalisée.

12. Procédé de réception selon l'une des revendications 9 à 11, dans lequel les terminaux mobiles (2) manifestent leur intérêt pour le message dans le cadre d'une campagne publicitaire.

13. Procédé de réception selon l'une des revendications 9 à 12, dans lequel les terminaux mobiles (2) manifestent leur intérêt pour le message par le biais d'abonnements.

## Patentansprüche

1. Verfahren zum Übertragen von Multimedia-Inhalten für ein Übertragungssystem (1), das bestimmt ist, die Inhalte an eine Vielzahl von mobilen Endgeräten (2) über ein Funkkommunikationsnetzwerk (3) (GPRS, UMTS) zu übertragen, umfassend die folgenden Schritte:
- einen ersten Übertragungsschritt über einen speziellen Kanal für die Punkt-zu-Punkt-Übertragungen durch einen ersten MMSC-Server, der imstande ist, einen Punkt-zu-Punkt-Übertragungsservice von Inhalten bereitzustellen, einer im MMS-Standard standardisierten Mitteilung, aufweisend eine für einen Inhalt spezifische Kennung, an alle Endgeräte (2), die von dem ersten MMSC-Server als an diesem Inhalt interessiert gespeichert sind,
- einen zweiten Übertragungsschritt durch den ersten MMSC-Server an einen zweiten, im MBMS-Standard standardisierten BM-SC-Server, der imstande ist, einen Übertragungsservice von Inhalten mit weiter Verbreitung bereitzustellen, einer Verbreitungsanfrage einer Nachricht, die den vollständigen Inhalt sowie dessen Kennung aufweist,
- einen dritten Übertragungsschritt mit weiter Verbreitung durch den zweiten BM-SC-Server der Nachricht über einen Kanal mit weiter Verbreitung.

2. Übertragungsverfahren nach Anspruch 1, wobei im ersten Schritt der Kennung ein Wert beigefügt wird, der einer Wartefrist für den Empfang des Inhalts durch die mobilen Endgeräte (2) entspricht, wobei es sich versteht, dass, wenn diese Wartefrist ohne Empfang des Inhalts durch die mobilen Endgeräte (2) verstrichen ist, eine Downloadanfrage von dem ersten MMSC-Server des Inhalts über den speziellen Kanal für die Punkt-zu-Punkt-Übertragungen durchgeführt wird.

3. Übertragungsverfahren nach einem der Ansprüche 1 und 2, wobei die Verbreitungsanfrage im MMS-Standard in einer Form des Typs "Broadcast-Request" vorliegt, aufweisend eine URI-Kennung und den "MMS Message"-Inhalt.

4. Übertragungsverfahren nach Anspruch 3, wobei die standardisierte Punkt-zu-Punkt-Verbindungsmitteilung im MMS-Standard in der Form M-Notification.ind vorliegt.

5. Übertragungsverfahren nach Anspruch 4, wobei der erste MMSC-Server eine Empfangsbestätigungsnachricht in der Form M-NotifyResp.ind von den mobilen Endgeräten (2) empfängt, welche die Mitteilung in der Form M-Notification.ind erhalten haben.

6. Übertragungsverfahren nach einem der vorangehenden Ansprüche, wobei der erste MMSC-Server einen Dechiffrierschlüssel an alle mobilen Endgeräte (2) überträgt, um für die Dechiffrierung des Inhalts von allen mobilen Endgeräten (2) verwendet zu werden.

7. Übertragungsverfahren nach einem der vorangehenden Ansprüche, wobei die mobilen Endgeräte (2) ihr Interesse für die Nachricht im Rahmen einer Werbekampagne zum Ausdruck bringen.

8. Übertragungsverfahren nach einem der vorangehenden Ansprüche, wobei die mobilen Endgeräte (2) ihr Interesse für die Nachricht anhand von Abonnements zum Ausdruck bringen.

9. Verfahren zum Empfangen von Multimedia-Inhalten durch ein mobiles Endgerät (2), das imstande ist, über ein Funkkommunikationsnetzwerk (3) zu kommunizieren, aufweisend die folgenden Schritte:
- einen ersten Empfangsschritt von einem ersten MMSC-Server für Punkt-zu-Übertragungen von Inhalten über einen speziellen Kanal für Punkt-zu-Punkt-Übertragungen einer für einen Inhalt oder für Inhalte spezifischen Kennung durch die mobilen Endgeräte (2), die von dem ersten MMSC-Server als an diesem Inhalt interessiert gespeichert sind,
- einen zweiten Übertragungsschritt durch den ersten MMSC-Server an einen zweiten im MBMS-Standard standardisierten BM-SC-Server, der imstande ist, einen Übertragungsservice von Inhalten mit weiter Verbreitung bereitzustellen, des vollständigen Inhalts sowie von dessen Kennung,
- einen dritten Empfangsschritt von dem BM-SC-Server über einen Kanal mit weiter Verbreitung einer Nachricht, welche den Inhalt oder die Inhalte sowie die Kennung aufweist, durch die mobilen Endgeräte (2).

10. Empfangsverfahren nach Anspruch 9, wobei während des ersten Empfangsschritts das mobile Endgerät (2) ebenfalls einen Dechiffrierschlüssel über den speziellen Kanal für die Punkt-zu-Punkt-Übertragungen des Funkkommunikationsnetzwerks (3) empfängt und während des zweiten Empfangsschritts das mobile Endgerät (2) diesen Dechiffrierschlüssel verwendet, um den Inhalt zu dechiffrieren.

11. Empfangsverfahren nach einem der Ansprüche 9 und 10, wobei das mobile Endgerät (2) einen der Kennung beigefügten Wert empfängt, der einer Wartefrist für den Empfang des Inhalts entspricht, wobei es sich versteht, dass, wenn diese Wartefrist ohne Empfang des Inhalts durch das mobile Endgerät (2) verstrichen ist, eine Downloadanfrage von dem ersten MMSC-Server des Inhalts über den speziellen Kanal für die Punkt-zu-Punkt-Übertragungen durchgeführt wird.

12. Empfangsverfahren nach einem der Ansprüche 9 bis 11, wobei die mobilen Endgeräte (2) ihr Interesse für die Nachricht im Rahmen einer Werbekampagne zum Ausdruck bringen.

13. Empfangsverfahren nach einem der Ansprüche 9 bis 12, wobei die mobilen Endgeräte (2) ihr Interesse für die Nachricht anhand von Abonnements zu Ausdruck bringen.

## Claims

1. A method for transmitting multimedia content for a transmission system (1) intended to transmit said content to a plurality of mobile terminals (2) via a radio communication network (3) (GPRS, UMTS), comprising the following steps:
- a first step of transmission on a dedicated channel for point-to-point transmissions, by a first MMSC server, capable of providing a point-to-point content transmission service, of a standardized notification in the MMS standard comprising an identifier specific to a piece of content to all terminals (2) registered by the first MMSC server as interested by that content,
- a second step of transmission by the first MMSC server to a second BM-SC server standardized in the MBMS standard, capable of providing a broadcast content transmission service, of a request to broadcast a message comprising said content in full as well as its identifier,
- a third step of broadcast transmission by said second BM-SC server of said message on a broadcast channel.

2. A transmission method according to claim 1, wherein, in the first step, attached to the identifier is a value corresponding to a waiting time for the mobile terminals (2) to receive the content, it being understood that, once that waiting time has passed without said content being received by the mobile terminals (2), a request by the first MMSC server to download said content via said dedicated channel for point-to-point transmissions is carried out.

3. A transmission method according to one of the claims 1 and 2, wherein the broadcast request is, in the MMS standard, in a form of the type "Broadcast-Request" comprising a URI identifier and said content is "MMS Message".

4. A transmission method according to claim 3, wherein the standardized point-to-point link notification in the MMS standard is of the form M-Notification.ind.

5. A transmission method according to claim 4, wherein the first MMSC server receives a receipt acknowledgement message of the form M-NotifyResp.ind from the mobile terminals (2) that received the notification of the form M-Notification.ind.

6. A transmission method according to one of the preceding claims, wherein the first MMSC server transmits a decryption key to all of the mobile terminals (2) in order to be used for the decryption of the content by all of the mobile terminals (2).

7. A transmission method according to one of the preceding claims, wherein the mobile terminals (2) express their interest for the message in the context of an advertising campaign.

8. A transmission method according to one of the preceding claims, wherein the mobile terminals (2) express their interest for the message by means of subscriptions.

9. A method for receiving multimedia content by a mobile terminal (2) able to communicate via the radio communication network (3) comprising the following steps:
- a first step of receiving, from a first MMSC point-to-point content transmission server, on a dedicated channel for point-to-point transmissions, an identifier specific to one or more pieces of content by the mobile terminals (2) registered by the first MMSC server as being interested by that content,
- a second step of transmitting, by the first MMSC server to the second BM-SC server standardized in the MBMS standard, able to provide a broadcast content transmission service, the content in full and its identifier,
- a third step of receipt from the BM-SC server, on a broadcast channel, a message comprising said content as well as the identifier by the mobile terminals (2).

10. A method for receipt according to claim 9, wherein, during the first step of receiving, the mobile terminal (2) also receives a decryption key by the dedicated channel for point-to-point transmissions from the radio communication network (3), and, during the second step of receiving, the mobile terminal (2) uses that decryption key to decrypt the content.

11. A method for receipt according to claims 9 and 10, wherein the mobile terminal (2) receives a value attached to the identifier corresponding to a waiting time for receiving the content, it being understood that, once that waiting time has passed without said content being received by the mobile terminal (2), a request by the first MMSC server to download said content via said dedicated channel for point-to-point transmissions is carried out.

12. A method for receipt according to one of the claims 9 to 11, wherein the mobile terminals (2) express their interest for the message in the context of an advertising campaign.

13. A method for receipt according to one of the claims 9 to 12, wherein the mobile terminals (2) express their interest for the message by means of subscriptions.
